# EUROPEAN PATENT SPECIFICATION

(11) **EP 1 729 457 B1**
(45) Date of publication and mention of the grant of the patent: **25.06.2008**
(21) Application number: 05291164.1
(22) Date of filing: 30.05.2005
(51) Int. Cl.: H04L 12/56

(54) **Method and network management system for determining a path in an integrated telecommunication network**
Netzsteuerungseinrichtung und -verfahren zur Bestimmung eines Pfads in einem integrierten Fernmeldenetzwerk
Procédé et dispositif de gestion d'un réseau pour déterminer un chemin dans un réseau de télécommunication integré.

(43) Date of publication of application: 06.12.2006
(73) Proprietor: Alcatel Lucent, 75008 Paris (FR)
(72) Inventor: Canali, Massimo, 20059 Vimercate (Milano) (IT); Mazzini, Andrea, 20060 Pessano c/Bornago (Milano) (IT); Volonte, Stefano, 20052 Monza (Milano) (IT)
(74) Representative: Menzietti, Domenico

(56) References cited:
- US-A1- 2003 172 362
- US-B1- 6 189 025

## Description

The present invention generally relates to the field of telecommunication networks. In particular, the present invention relates to a method of determining a path in an integrated telecommunication network and a network management system, either centralized or distributed, adapted to determine a path in such a network.

In a telecommunication network, traffic is transmitted from a source node to a destination node along a path possibly comprising intermediate nodes and links between nodes.

In a packet-switched network, traffic is carried by packets travelling through the network. Ethernet networks and ATM networks are examples of packet-switched networks.

Besides, in a circuit-switched network traffic is transmitted as a continuous bit flow. More particularly, in a synchronous circuit-switched network traffic is carried by synchronous structures. SDH networks and Sonet networks are examples of synchronous circuit-switched networks.

An integrated network is a telecommunication network comprising nodes that support more than one switching type.

For instance, an integrated network may support both packet-switching (e.g. Ethernet) and circuit-switching (e.g. SDH). In such a network, traffic to be transported from a source node to a destination node may be carried by Ethernet packets, which are adapted to be processed by Ethernet nodes. As an alternative, Ethernet packets may be encapsulated in lower order SDH virtual containers VC-12 which are adapted to be processed by lower order SDH nodes. As an alternative, lower order SDH virtual containers VC-12 may be multiplexed in higher order SDH virtual containers VC-4, which are adapted to be processed by higher order SDH nodes.

In other words, an integrated network comprises more than one layer, each layer corresponding to a different switching type; traffic can be processed (i.e. transmitted and switched) at any layer of the network according to node capacity and network schemas.

In the following description, for clarity reasons, it will be assumed that an integrated network simply comprises two layers, i.e. a server layer and a client layer. Traffic can be processed at client layer; as an alternative, the traffic can be encapsulated in server layer frames. For instance, the server layer may be the SDH layer, and the client layer may be the Ethernet layer. For instance, the server layer may be the SDH higher order layer and the client layer may be the SDH lower order layer. These are non-limiting examples, as other server layers and client layers may be provided as well.

An integrated network typically comprises nodes which are adapted to support server layer switching; in the following description, these nodes will be briefly termed server nodes. Besides, an integrated network typically comprises nodes which are adapted to support client layer switching; in the following description, these nodes will be briefly termed client nodes. Besides, an integrated network may also comprise multi-service nodes, i.e. nodes which are adapted to support both server layer switching and client layer switching. Typically, a multi-service node comprises a server switching matrix, a client switching matrix, a number of input/output server ports, a number of input/output client ports, and adaptation blocks for adapting client layer traffic to server layer traffic and *vice versa.*

When client traffic enters a multi-service node through an input/output client port, it may be switched at the client layer. Alternatively, it may be adapted to the server layer and it can be switched at the server layer. Similarly, server traffic entering the multi-service node through an input/output server port may be either switched at the server layer or adapted to the client layer and switched at the client layer.

As already mentioned, in a telecommunication network traffic is transmitted from a source node to a destination node along a path comprising intermediate nodes and links between nodes. The path can be determined, either statically or automatically, by a so-called "routing algorithm".

A routing algorithm typically evaluates all the possible paths between source and destination nodes, according to the network topology (nodes arrangement, possible links between nodes). Congested/failed nodes and congested/failed links are generally marked as unavailable, so that the routing algorithm ignores them.

After evaluating all possible paths, the routing algorithm evaluates the cost of each possible path. The cost of a path depends on different parameters, such as, for instance:
- hardware features of the links (copper wire, optical fibre, ...);
- path length (expressed in number of links);
- link length (expressed in number of repeaters for each link);
- usage percentage of the links of the path;
- maintainability of the path;
- reliability of the path; and
- operator driven routing constrains.

Then, the routing algorithm selects the optimal path among the possible paths. Typically, the optimal path is the lower cost path.

Once selected the optimal path, the routing algorithm provides the source node, the destination node and the intermediate nodes of the path with routing information. Such nodes will configure their switching matrixes according to the routing information.

In an integrated network according to the state of the art, each layer has its own routing algorithm. In the following description, the routing algorithm of the client layer will be briefly termed "client routing algorithm", while the routing algorithm of the server layer will be briefly termed "server routing algorithm".

According to the prior art, each routing algorithm of each layer of the integrated network evaluates possible paths formed only by nodes and links supporting switching at the same layer. More particularly, the client routing algorithm evaluates possible paths comprising only client links connecting client nodes and multi-service nodes (briefly termed "client paths"). Similarly, the server routing algorithm evaluates possible paths formed only by server links connecting server nodes and multi-service nodes (briefly termed "server paths").

When client traffic must be routed from a multi-service source node to a multi-service destination node, the client routing algorithm first evaluates all the possible client paths and it estimates their costs. Due to lack of resources (e.g., faults or congestions), the client routing algorithm might not be able to determine any client path.

In this case, the client layer operator typically requires the intervention of the server routing algorithm. The server routing algorithm, independently from the client path evaluation performed by the client routing algorithm, evaluates all the possible server paths, it estimates their costs and it selects the optimal one. After determining the optimal server path, the integrated network allocates it.

Thus, the multi-service source node adapts the client traffic to the server layer. For instance, in case the client traffic is a flow of Ethernet packets, the multi-service node may encapsulate the Ethernet packets into a lower order SDH VC-12, and then in a higher order SDH VC-4. Then, the VC-4 is transmitted along a VC-4 trail which has been allocated along the server path.

This solution has some disadvantages. In particular, this solution does not allow to optimise the exploitation of the integrated network resources, for the following reasons.

Firstly, the client path capacity is generally lower than the server trail capacity. As the server trail is exclusively allocated for transporting the client traffic, only a small portion of the server trail will be exploited.

Moreover, in some cases the client routing algorithm may not be able to determine any client path because of a failure/congestion of a single node/link. Nevertheless, a path has to be fully re-determined at the server layer. This implies that the server path is needlessly allocated.

Furthermore, it has to be noticed that the optimum server path may be much more costly than the optimum client path that the client routing algorithm would have been able to select if no failure/congestion had occurred.

Moreover, client layer and server layer can be managed by different business units of a service provider. Thus, in case a path could not be found at the client layer, requiring the intervention of the server layer may take a long time, thus implying unacceptable delays in providing client layer services.

US 2003/0172362 A1 discloses a network wherein each node determines a connection type attributes available for each signal type supported by the node. Each signal type represents a different connection routing layer within the telecommunications network. Adaptation costs involved in traversing from one connection routing layer to another connection routing layer in the node are calculated. The connection type attributes and adaptation costs are included in a link state advertisement broadcasted by each node in the telecommunications network. A route calculation is performed for a desired signal to determine a route through the telecommunications network for the signal. The route calculation takes into account the various connection type attributes, availability, and adaptation costs in determining the shortest route for the signal through the telecommunications network.

Thus, the general object of the present invention is providing a method of determining a path in a integrated network which overcomes the aforesaid problems.

More particularly, an object of the present invention is providing a method of determining a path in a integrated network which allows to exploit in a more efficient and dynamic way the integrated network resources.

These and other objects are achieved by a method of determining a path in a network according to claim 1, a network management system according to claim 9 and a network according to claim 18. Furthermore, the present invention relates to a computer product according to claim 19. Further advantageous features of the invention are set forth into the respective dependent claims. All the claims are deemed to be an integral part of the present description.

According to the present invention, in an integrated network, the routing algorithm of a first layer (either client or server) determines, for each pair of multi-service nodes of the network, whether such a pair of multi-service nodes may be connected each other at the first layer. Such a possible connection will be referred to as "adjacency" in the following description. An adjacency could be either a direct link at the first layer possibly connecting the two multi-service nodes, or a subnetwork at the first layer possibly connecting the two mufti-service nodes. Two mufti-service nodes could be connected by a single adjacency or by more than one adjacency.

Once determined all the adjacencies, the routing algorithm of the first layer estimates the cost of each adjacency.

After estimating the costs of all the adjacencies, the routing algorithm of the first layer notifies to the routing algorithm of the second layer (either server or client) the existence of the adjacencies and their costs.

Thus, when the routing algorithm of the second layer evaluates all the possible paths, such paths may comprise both links at the second layer and adjacencies at the first layer.

According to a first aspect, the present invention provides a method of determining a path in a telecommunication network from a source node to a destination node according to claim 1.

According to a second aspect, the invention provides a network management system, either centralized or distributed, adapted to determine a path in a telecommunication network, according to claim 11.

According to a third aspect, the present invention provides a telecommunication network comprising at least two layers, the telecommunication network comprising a network management system as set forth above.

According to a fourth aspect, the present invention provides a computer product comprising computer program code means adapted to perform all the steps of the method as set forth above. The computer product can be either a computer program or a computer storage medium.

Advantageously, the method of the invention allows to exploit in a more efficient and dynamic way the resources of the network.

For instance, if the first layer is the server layer and the second layer is the client layer, according to the invention, the client routing algorithm is able to determine possible paths by using not only client links between client nodes and multi-service nodes, but also adjacencies at the server layer between multi-service nodes. This advantageously allows to avoid any manual intervention on the server routing algorithm. This also allows to prevent a customer from dealing with the server layer mechanisms, which are generally much more complex than client layer mechanisms. Another advantage consists in avoiding to needlessly allocate a server trail along a whole server path for transporting client information.

Besides, if the first layer is the client layer and the second layer is the server layer, the server routing algorithm is able to evaluate possible server paths by using not only server links between server nodes and multi-service nodes, but also adjacencies at the client layer between multi-service nodes. This advantageously implies more flexibility, as the server routing algorithm is able to determine a higher number of possible paths. Moreover, the cost of the optimal path determined according to the present invention will be lower than the cost of an optimal server path determined according to the prior art, as the client layer and the server layer are simultaneously optimised.

Further features and advantages of the present invention will become clear by the following description, given by way of non limiting example, to be read with reference to the accompanying drawings, wherein:
- Figure 1 schematically shows an exemplary integrated network;
- Figure 2 schematically shows a known multi-service node;
- Figures 3a and 3b show a client path and a server path, respectively, determined according to the prior art, in the integrated network of Figure 1;
- Figures 4a and 4b show client paths and adjacencies determined through a method according to a first embodiment of the present invention; and
- Figures 5a and 5b show client paths and adjacencies determined through a method according to a second embodiment of the present invention.

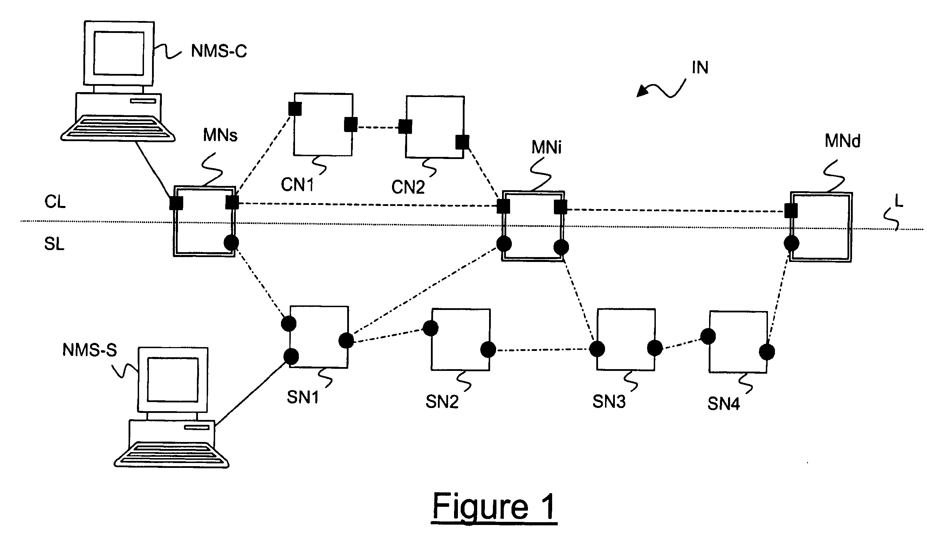

Figure 1 shows an integrated network IN. The topology of the network IN of Figure 1 is only exemplary, and it has been chosen as it helps to clearly represent the distinction between different network layers. Nevertheless, the integrated network IN may have a different topology (ring, mesh, bus or the like). The integrated network IN is not in scale.

The integrated network IN of Figure 1 is adapted to support switching at a server layer SL and switching at a client layer CL. The client layer CL and the server layer SL are symbolically separated by a dotted line L.

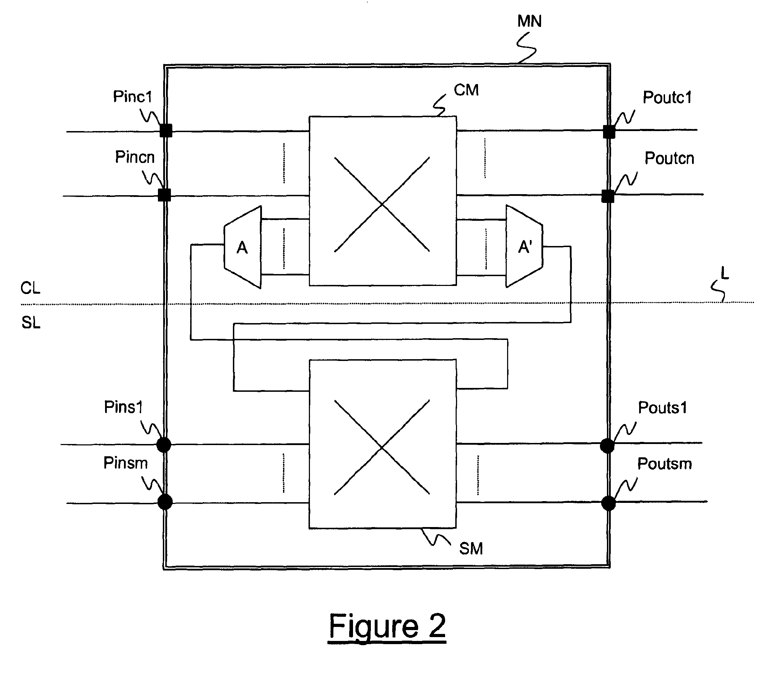

The integrated network IN comprises three multi-service nodes MNs, MNi, MNd, which are adapted to perform both server layer switching and client layer switching, as it will be further detailed by referring to Figure 2. The multi-service nodes are shown by dual line squares.

At the client layer CL, the network IN further comprises two client nodes CN1, CN2.

At the server layer SL, the network IN further comprises four server nodes SN1, SN2, SN3, SN4.

At the client layer, the integrated network IN comprises a client network management system NMS-C, which is adapted to execute the client routing algorithm and other client network management software programs. The client network management system NMS-C of Figure 1 is connected to the multi-service node MNs, through which it communicates with all the other nodes at the client layer.

Besides, at the server layer, the integrated network IN comprises a server network management system NMS-S, which is adapted to execute the server routing algorithm and other server network management software programs. The server network management system NMS-S of Figure 1 is connected to the server node SN1, through which it communicates with all the other nodes at the server layer.

In the following description and in the claims, the term "network management system" will refer to storing and processing means (such as a computer) which are adapted to store and execute network management software programs. The programming language of the software program can be for example C, C++ or Java. The network management system can be either centralized or distributed; in a centralized NMS the processing means can be a processor of a Personal Computer or Workstation (Sun or HP), while in a distributed NMS the processing means can be an hardware device of a Control Plane Element of an Automatically Switched Optical Network (ASON), like a microprocessor external or embedded into an ASIC (Application Specific Integrated Circuit) or into a FPGA (Field Programmable Gate Array). The processing means perform (through one or more software program modules) the calculation of at least one possible path between a source node and a destination node of the telecommunication network, the allocation of one path among said at least one possible path, the estimation of a path parameter for each of the at least one possible path and the allocation of a path according to the estimated path parameter.

Figure 1 also shows, with dashed lines, all the possible client links at the client layer CL between the multi-service nodes MNs, MNi, MNd and the client nodes CN1, CN2. Input/output client ports of multi-service nodes MNs, MNi, MNd and client nodes CN1, CN2 are represented as squares.

Similarly, Figure1 shows, with dash and dot lines, all the possible server links at the server layer SL between the multi-service nodes MNs, MNi, MNd and the server nodes SN1, SN2, SN3, SN4. Input/output server ports of multi-service nodes MNs, MNi, MNd and server nodes SN1, SN2, SN3, SN4 are represented as circles.

As already mentioned, the integrated network IN comprises three multi-service nodes MNs, Mni, MNd. Figure 2 schematically shows the structure of an exemplary multi-service node MN.

The multi-service node MN of Figure 2 comprises a server switching matrix SM and a client switching matrix CM. Further, the node MN comprises a number n of input client ports Pinc1, ... Pincn (represented as squares in Figure 2), each port being adapted to receive client traffic. Further, the node MN comprises a number m of input server ports Pins1, ... Pinsm (represented as circles in Figure 2), each port being adapted to receive server traffic. The node MN further comprises n client output ports Poutc1, ... Poutcn and m server output ports Pouts1, ... Poutsm.

Then, the node MN comprises a first adapter A for adapting server traffic to the client layer and a second adapter A' for adapting client traffic to the server layer.

A dotted line L indicates the logical separation between the client layer CL and the server layer SL.

In the following, a brief description of the operation of the multi-service node MN will be provided.

When the node MN receives server traffic (for instance, an SDH VC-4) through one of its server input ports Pins1, ... Pinsm, two alternatives are provided. As a first alternative, the server traffic may be switched by the server switching matrix SM towards one of the server output ports Pouts1, ... Poutsm. Alternatively, the server traffic may be switched by the server switching matrix SM towards the first adapter A.

The first adapter A adapts the server layer traffic to the client layer CL; for instance, if the server traffic is a VC-4, the adapter A extracts the single VC-12s which are contained into the VC-4. Then, the VC-12s are switched by the client switching matrix CM to respective client output ports Poutc1, ... Poutcn.

Similarly, when the node MN receives client traffic (for instance, Ethernet packets) through one of its client input ports Pinc1, ... Pincn, two alternatives are provided. As a first alternative, the client traffic may be switched by the client switching matrix CM towards one of the client output ports Poutc1, ... Poutcn. Alternatively, the client traffic may be switched by the client switching matrix CM towards the second adapter A'.

The second adapter A' adapts the client traffic to the server layer; for instance, if the client traffic is a flow of Ethernet packets, the adapter A' encapsulates the Ethernet packets in a VC-12 and then in a VC-4. Then, the VC-4 is switched by the server switching matrix towards a respective server output port Pouts1, ... Poutsm.

As already mentioned, a routing algorithm determinates a path connecting a source node and a destination node. In an integrated network, according to the prior art, each layer has an independent routing algorithm.

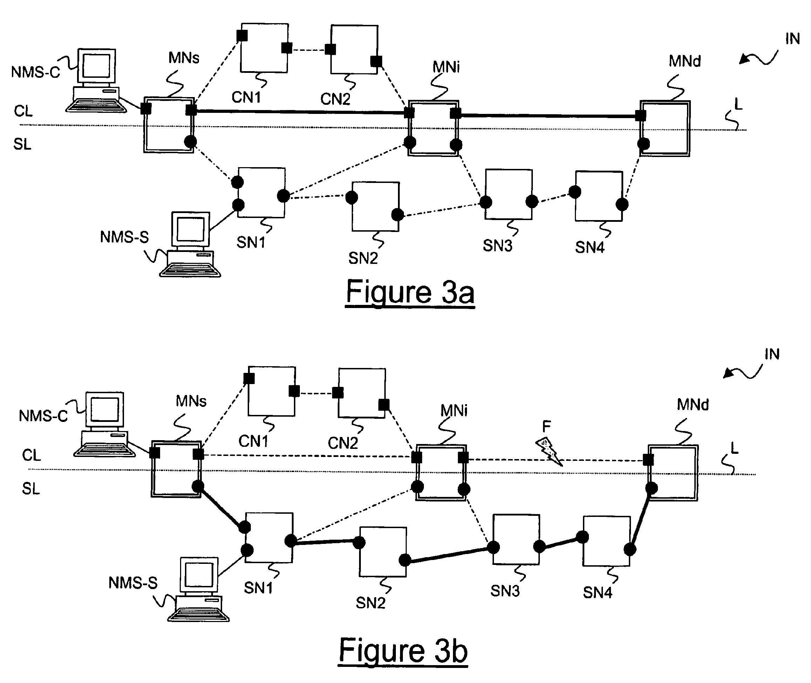

Figures 3a and 3b schematically show a client path and a server path, respectively, determined according to the prior art, in the integrated network of Figure 1. A detailed description of the network IN can be found above by referring to the description of Figure 1.

It is assumed that client traffic has to be routed from the multi-service source node MNs to the destination multi-service node MNd. According to the known solution, firstly the client routing algorithm evaluates the possible client paths between MNs and MNd at the client layer CL. Such client paths only comprise client links. In the integrated network IN, there are two possible client paths:
- first possible client path: MNs-MNi-MNd; or
- second possible client path: MNs-CN1-CN2-MNi-MNd.

Typically, the client routing algorithm estimates the costs of these two possible client paths, and it selects the lower cost client path. For instance, the lower cost client path may be the first possible client path MNs-MNi-MNd, which is marked with a thick line in Figure 3a.

However, in some cases, the client routing algorithm may not be able to find any client path. For instance, Figure 3b shows a situation wherein the client link between MNi and MNd is affected by a failure F.

In this case, the client routing algorithm requires the intervention of the server routing algorithm.

The server routing algorithm evaluates the possible server paths at the server layer SL. In the integrated network IN of Figure 3b, there are two possible server paths:
- first possible server path: MNs-SN1-SN2-SN3-SN4-MNd; or
- second possible server path: MNs-SN1-MNi-SN3-SN4-MNd.

Thus, the server routing algorithm evaluates the costs of these two possible server paths, and it selects the lower cost server path.

It can be assumed, for instance, that the lower cost server path is the path MNs-SN1-SN2-SN3-SN4-MNd, which is shown with a thick line in Figure 3b.

Thus, for instance, in case the server layer is the SDH higher order layer, a VC-4 trail is allocated along the selected server path. The source multi-service node MNs adapts the client traffic (for instance a VC-12 tributary) to the SDH higher order layer, and the VC-4 trail transports the VC-12 tributary from node MNs to node MNd along the selected server path.

Thus, according to the prior art, the client routing algorithm and the server routing algorithm work independently one from the other, each routing algorithm exploiting only resources belonging to its own layer.

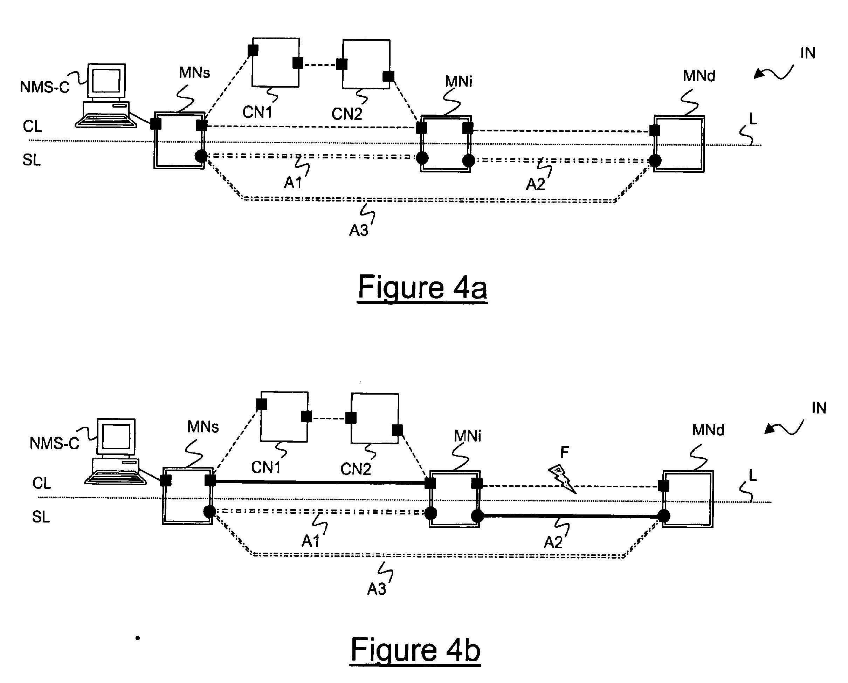

The basic idea of the present invention is to establish an interaction between the two routing algorithms, as it will be discussed in the following by referring to Figures 4a and 4b.

Figures 4a and 4b show client paths and adjacencies determined through a method according to a first embodiment of the present invention.

As in Figures 3a and 3b, client traffic has to be routed from the multi-service source node MNs to the destination multi-service node MNd.

According to a first embodiment of the present invention, for each pair of multi-service nodes, the server routing algorithm determines whether the pair of multi-service nodes may be connected one to the other at the server layer. As already mentioned, in the present description this possible links between multi-service nodes at the server layer will be termed "adjacency".

If a pair of multi-service nodes may be connected by an adjacency, the server routing algorithm estimates the adjacency cost. After having evaluated all the adjacencies and having estimated their costs, the server routing algorithm notifies these information to the client routing algorithm.

Thus, according to a first embodiment of the present invention, the client routing algorithm evaluates the possible paths by using both the client links between client nodes and multi-service nodes, and the adjacencies between multi-service nodes.

Thus, by referring to Figure 4a, it can be seen that in the network IN the following adjacencies can be defined:
- adjacency MNs÷MNi (A1): consisting of MNs-SN1-MNi;
- adjacency MNi÷MNd (A2): consisting of MNi-SN3-SN4-MNd; and
- adjacency MNs÷MNd (A3): consisting of MNs-SN1-SN2-SN3-SN4-MNd,
where the symbol "÷" indicates an adjacency. In this case, each pair of multi-service node is connected by a single adjacency.

The server routing algorithm estimates the respective adjacency costs and notifies these adjacency costs to the client routing algorithm. Thus, the client routing algorithm may evaluate possible paths both with client links (shown in Figure 4a with dashed lines) and with adjacencies A1, A2, A3 (shown in Figure 4a with double dashed-dotted lines). The possible paths are:
- first possible path (at client layer): MNs-MNi-MNd;
- second possible path (at client layer): MNs-CN1-CN2-MNi-MNd;
- third possible path (at server and client layers): MNs÷MNi-MNd;
- fourth possible path (at client and server layers): MNs-MNi÷MNd;
- fifth possible path (at client and server layers): MNs-CN1-CN2-MNi÷MNd;
- sixth possible path (at server layer): MNs÷MNi÷MNd; or
- seventh possible path (at server layer): MNs÷MNd.

Thus, the client routing algorithm selects the lower cost path among these possible seven paths.

In case a failure F occurs on the client link between MNi and MNd (as shown in Figure 4b), the lower cost path may be, for instance, the fourth possible path MNs-MNi÷MNd, which is marked in Figure 4b with a thick line, and which contains both a client link and the adjacency A2.

By comparing Figure 3b and Figure 4b, it can be noticed that, according to the present invention, in case of a failure of the client link between MNi and MNd, the server trail is allocated only along the adjacency A2, while along the remaining path the client traffic is transported by client links. This allows to minimise the use of server trails, which are in general very costly.

Moreover, according to a preferred embodiment of the present invention, a sequence of server trails may create a client adjacency instead of a single long server trail.

Moreover, advantageously, interaction between server layer and client layer is automated, thus avoiding the need of manual intervention on the server routing algorithms, which typically may be done only by specialised operators.

As already mentioned, the integrated network IN of Figure 4a and 4b is typically provided with a client network management system NMS-C, wherein routing algorithm and other network management software programs are executed.

According to the invention, the client network management system NMS-C is preferably provided with a graphic user interface, through which the client network operator of the integrated network IN is able to interact with the routing algorithm described above by referring to Figure 4a and 4b.

Such a graphic user interface preferably displays all the resources of the integrated network IN at the client layer, i.e. client nodes, multi-service nodes, client links and adjacencies. For each resource, state information may be provided, such as usage percentage, failure/congestion alarms, or the like. During execution of the routing algorithm according to the present invention, the graphic user interface preferably displays determined possible paths and selected optimal path. Preferably, through the graphic user interface, the network operator should be able to manually adjust the results obtained by the routing algorithm according to the present invention.

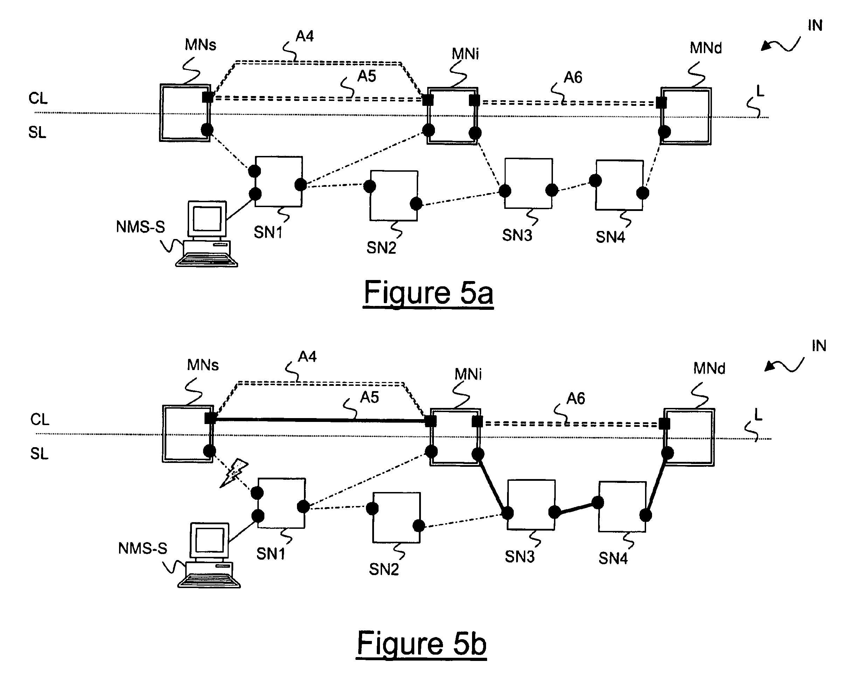

Figures 5a and 5b show client paths and adjacencies determined through a method according to a second embodiment of the present invention.

As in Figures 4a and 4b, client traffic has to be routed from the multi-service source node MNs to the destination multi-service node MNd.

It is assumed that the server routing algorithm is required by the client layer to select a path between MNs and MNd.

According to a second embodiment of the present invention, the client routing algorithm determines, for each pair of multi-service nodes, whether the pair of multi-service nodes may be connected at the client layer. A possible link at the client layer between a pair of multi-service nodes will be termed "adjacency". After determining all the adjacencies, the client routing algorithm estimates their costs. Then, it notifies these information to the server routing algorithm.

The server routing algorithm, according to the invention, evaluates the possible paths by using both the server links between server nodes and multi-service nodes, and the adjacencies between multi-service nodes.

Thus, by referring to Figure 5a, it can be seen that in the integrated network IN the following adjacencies can be determined:
- first adjacency MNs÷MNi (A4): consisting of MNs-CN1-CN2-MNi;
- second adjacency MNs÷MNi (A5): consisting of MNs-MNi; and
- adjacency MNi÷MNd (A6): consisting of MNi-MNd.
where, again, the symbol "÷" indicates an adjacency.

It can be noticed that the pair of multi-service nodes MNs, MNi may be connected through two adjacencies: the adjacency A4 comprises a client sub-network including the two client nodes CN1, CN2, while the adjacency A5 is the client link between MNs and MNi.

The client routing algorithm estimates the respective adjacency costs and notifies them to the server routing algorithm. Thus, the server routing algorithm is able to evaluate possible paths using both server links (shown in Figure 5a with dashed-dotted lines) and adjacencies A4, A5, A6 (shown in Figure 5b with double dashed lines). The possible paths are:
- first possible path: MNs÷MNi-SN3-SN4-MNd (MNs÷MNi through A4);
- second possible path: MNs÷MNi-SN3-SN4-MNd (MNs÷MNi through A5);
- third possible path: MNs-SN1-SN2-SN3-SN4-MNd;
- fourth possible path: MNs-SN1-MNi-SN3-SN4-MNd;
- fifth possible path: MNs÷MNi÷MNd; or
- sixth possible path: MNs-SN1-MNi÷MNd.

Thus, the server routing algorithm selects the lower cost path among these possible paths.

By comparing Figure 5b with Figure 3b, it can be noticed that, according to the present invention, the flexibility of the server routing algorithm is increased. For instance, in case the server link between MNs and SN1 is affected by a failure, as shown in Figure 5b, or if the server node SN1 is congested, the server routing algorithm will be able to provide a path, by selecting one of the possible paths comprising either A4 or A5.

As already mentioned, the integrated network IN is provided with a server network management system NMS-S. According to the invention, the server network management system of the integrated network IN is preferably provided with a graphic user interface, through which the server network operator of the integrated network IN is able to interact with the routing algorithm described above by referring to Figure 5a and 5b.

Such a graphic user interface preferably displays all the resources of the integrated network IN at the server layer, i.e. server nodes, multi-service nodes, server links and adjacencies. For each resource, state information may be provided, such as usage percentage, failure/congestion alarms, or the like. During execution of the routing algorithm according to the present invention, the graphic user interface preferably displays determined possible paths and selected optimal path. Preferably, through the graphic user interface, the network operator should be able to manually adjust the results obtained by the routing algorithm according to the present invention.

## Claims

1. A method of determining a path in a telecommunication network (IN) from a source node (MNs) to a destination node (MNd), the telecommunication network (IN) comprising at least two layers (SL, CL), a first multi-service node (MNi) and second multi-service node (MNd) adapted to support switching at both said at least two layers (SL, CL), the method comprising, at a second layer (CL) of said at least two layers (SL, CL):
- calculating at least one possible path between said source node (MNs) and said destination node (MNd); and
- allocating a path among said at least one possible path,
said method being **characterized in that**, before said step of calculating, it further comprises, at a first layer (SL) of said at least two layers (SL,CL),
- determining an adjacency (A1, A2, A3) connecting said first multi-service node (MNi) and said second multi-service node (MNd) at said first layer (SL); and
- notifying to said second layer (CL) an existence of said adjacency (A1, A2, A3),
and **in that** the step of calculating at least one possible path comprises taking into account both said adjacency (A1, A2, A3) and at least one path link (A4, A5, A6) of said second layer (CL).

2. The method according to claim 1, wherein said first layer is a server layer (SL) and said second layer is a client layer (CL).

3. The method according to claim 1 or 2, wherein it further comprises the step of estimating a path parameter for each of the at least one possible path, further wherein the step of allocating a path comprises allocating a path according to said estimated path parameter.

4. The method according to claim 3, wherein said path parameter is a path cost parameter and wherein the step of allocating a path comprises allocating the path which is associated with the lower estimated path cost parameter.

5. The method according to claim 4, wherein the step of estimating a path cost parameter for each of the at least one possible path comprises taking into account one or more of the following parameters: hardware features of the links, path length, link length, usage percentage of the links, maintainability, reliability and operator driven routing constrains.

6. The method according to any of preCeding claims, wherein it further comprises the step of displaying the availability of said adjacency (A1. A2, A3) of said first layer (SL) and said at least one path link (A4, A5, A6) of said second layer (CL).

7. The method according to any of preceding claims, wherein said two layers (CL, SL) are adjacent layers.

8. The method according to any of claims 1 to 7, wherein said two layers (CL, SL) are non adjacent layers and comprise a synchronous transport hierarchy layer and an internet protocol layer.

9. A network management system (NMS-C, NMS-S) adapted to determine a path in a telecommunication network (IN), said telecommunication network (IN) comprising at least two layers (CL, SL), a first multi-service node (MNi) and second multi-service node (MNd) adapted to support switching at both said at least two layers (SL, CL), said network management system (NMS-C, NMS-S) comprising:
- a path calculator for calculating at least one possible path at a second layer (CL) of said at least two layers (CL, SL) between a source node (MNs) and a destination node (MNd) of said telecommunication network (IN); and
- a path allocator for allocating one path among said at least one possible path,
said system (NMS-C, NMS-S) being **characterized in that** it further comprises:
- means (NMS-S) for determining an adjacency (A1, A2, A3) connecting said first multi-service node (MNi) and said second multi-service node (MNd) at a first layer (SL) of said at least two layers (SL, CL); and
- means (NMS-S) for notifying to said path calculator an existence of said adjacency (A1, A2, A3),
and **in that** the path calculator taking into account both said adjacency (A1, A2, A3) of said first layer (SL) and at least one path link (A4, A5, A6) of said second layers (CL, SL).

10. The network management system according to claim 9, wherein said network management system comprises a server network management system (NMS-S).

11. The network management system according to claim 9, wherein said network management system comprises a client network management system (NMS-C).

12. The network management system according to any of claims 9 to 11, wherein it further comprises an estimator for estimating a path parameter for each of the at least one possible path, further wherein the allocator is adapted to allocate a path according to said estimated path parameter.

13. The network management system according to claim 12, wherein said path parameter is a path cost parameter and wherein the allocator is adapted to allocate the path which is associated with the lower estimated path cost parameter.

14. The network management system according to any of claims 12 to 13, wherein said estimator is adapted to take into account one or more of the following parameters: hardware features of the links, path length, link length, usage percentage of the links, maintainability, reliability and operator driven routing constrains.

15. The network management system according to any of claims 9 to 14, further comprising a display for displaying the availability of both said adjacency (A1, A2, A3) of said first layer (SL) and said at least one path link (A4, A5, A6) of said second layer (CL).

16. The network management system according to any of claims 9 to 15, wherein said two layers (SL, CL) are adjacent layers.

17. The network management system according to any of claims 9 to 15, wherein said two layers (SL, CL) are non adjacent layers and comprise a synchronous transport hierarchy layer and an internet protocol layer.

18. A telecommunication network (IN) comprising at least two layers (SL, CL), said telecommunication network (IN) comprising a network management system according to any of claims 9 to 17.

19. A computer product comprising computer program code means adapted to perform all the steps of claim 1.

20. A computer product according to claim 19, **characterized in that** it is a computer program.

21. A computer product according to claim 19, **characterized in that** it is a computer storage medium.

## Patentansprüche

1. Ein Verfahren der Bestimmung eines Pfads in einem Telekommunikationsnetz (IN) von einem Quellenknoten (MNs) zu einem Zielknoten (MNd), wobei das Telekommunikationsnetz (IN) mindestens umfaßt zwei Schichten (SL, CL), einen ersten Mehrdiensteknoten (MNi) und zweiten Mehrdiensteknoten (MNd), die angepaßt sind, um die Vermittlung an beiden mindestens zwei Schichten (SL, CL) zu unterstützen, wobei das Verfahren auf einer zweiten Schicht (CL) der mindestens zwei Schichten (SL, CL) umfaßt:
- das Berechnen mindestens eines möglichen Pfads zwischen dem Quellenknoten (MNs) und dem Zielknoten (MNd); und
- das Zuweisen eines Pfads unter mindestens einem möglichen Pfad,
wobei das Verfahren **dadurch gekennzeichnet, daß** es vor dem Schritt des Berechnens außerdem auf einer ersten Schicht (SL) der mindestens zwei Schichten (SL,CL) umfaßt,
- das Bestimmen einer Adjazenz (A1, A2, A3), die den ersten Mehrdiensteknoten (MNi) und den zweiten Mehrdiensteknoten (MNd) auf der ersten Schicht (SL) verbindet; und
- das Mitteilen an die zweite Schicht (CL) über die Existenz der Adjazenz (A1, A2, A3),
und **dadurch**, daß der Schritt des Berechnens mindestens eines möglichen Pfads die Berücksichtigung sowohl der Adjazenz (A1, A2, A3) als auch mindestens einer Pfadverbindung (A4, A5, A6) der zweiten Schicht (CL) umfaßt.

2. Das Verfahren gemäß Anspruch 1, in welchem die erste Schicht eine Serverschicht (SL) ist und die zweite Schicht eine Clientschicht (CL) ist.

3. Das Verfahren nach Anspruch 1 oder 2, in welchem es außerdem umfaßt den Schritt des Einschätzens eines Pfadparameters für jeden des mindestens einen möglichen Pfads, in welchem außerdem der Schritt des Zuweisens eines Pfads das zuweisen eines Pfads gemäß dem geschätzten Pfadparameter umfaßt.

4. Das Verfahren nach Anspruch 3, in welchem der Pfadparameter ein Pfadkostenparameter ist und in welchem der Schritt des Zuweisens eines Pfads das zuweisen des Pfads umfaßt, der mit dem geringeren geschätzten Pfadkostenparameter verbunden ist.

5. Das Verfahren nach Anspruch 4, in welchem der Schritt des Schätzens eines Pfadkostenparameters für jeden des mindestens einen möglichen Pfads die Berücksichtigung eines oder mehr der folgenden Parameter umfaßt: Hardware-Leistungsmerkmale der Verbindungen, Pfadlänge, Verbindungslänge, prozentuale Belegung der Verbindungen, Wartungsfreundlichkeit, Zuverlässigkeit und bedienergesteuerte Routing-Einschränkungen.

6. Das Verfahren gemäß jedem der vorhergehenden Ansprüche, in welchem es außerdem den Schritt des Anzeigens der Verfügbarkeit der Adjazenz (A1, A2, A3) der ersten Schicht (SL) und mindestens einer Pfadverbindung (A4, A5, A6) der zweiten Schicht (CL) umfaßt.

7. Das Verfahren gemäß jedem der vorgehenden Ansprüche, in welchem zwei Schichten (CL, SL) angrenzende Schichten sind.

8. Das Verfahren nach jedem der Ansprüche 1 bis 7, in welchem zwei Schichten (CL, SL) nichtangrenzende Schichten sind und eine synchrone Transporthierarchieschicht und eine Internet-Protokollschicht umfassen.

9. Ein Netzmanagementsystem (NMS-C, NMS-S), das angepaßt ist, um einen Pfad in einem Telekommunikationsnetz (IN) zu bestimmen, wobei das Telekommunikationsnetz (IN) umfaßt mindestens zwei Schichten (CL, SL), einen ersten Mehrdiensteknoten (MNi) und zweiten Mehrdiensteknoten (MNd), die angepaßt sind, um die Vermittlung auf beiden der mindestens zwei Schichten (SL, CL) zu unterstützen, wobei das Netzmanagementsystem (NMS-C, NMS-S) umfaßt:
- einen Pfadrechner zum Berechnen mindestens eines möglichen Pfads auf einer zweiten Schicht (CL) der mindestens zwei Schichten (CL, SL) zwischen einem Quellenknoten (MNs) und einem zielknoten (MNd) des Telekommunikationsnetzes (IN); und
- einen Pfadzuordner zur Zuordnung eines Pfads unter mindestens einem möglichen Pfad,
wobei das System (NMS-C, NMS-S) **dadurch gekennzeichnet, daß** es außerdem umfaßt:
- Mittel (NMS-S) zum Bestimmen einer Adjazenz (A1, A2, A3), die den ersten Mehrdiensteknoten (MNi) und zweiten Mehrdiensteknoten (MNd) auf einer ersten Schicht (SL) der mindestens zwei Schichten (SL, CL) verbindet; und
- Mittel (NMS-S) zum Mitteilen an den Pfadrechner über die Existenz der Adjazenz (A1, A2, A3),
und **dadurch**, daß der Pfadrechner sowohl die Adjazenz (A1, A2, A3) der ersten Schicht (SL) als auch mindestens eine Pfadverbindung (A4, A5, A6) der zweiten Schichten (CL, SL) berücksichtigt.

10. Das Netzmanagementsystem nach Anspruch 9, in welchem das Netzmanagementsystem ein Server-Netzmanagementsystem (NMS-S) umfaßt

11. Das Netzmanagementsystem nach Anspruch 9, in welchem das Netzmanagementsystem ein Client-Netzmanagementsystem (NhIS-C) umfaßt.

12. Das Netzmanagementsystem nach jedem der Ansprüche 9 bis 11, in welchem es außerdem eine Schätzfunktion zum Schätzen eines Pfadparameters für jeden des mindestens einen möglichen Pfads umfaßt, außerdem in welchem der Zuordner angepaßt ist, um einen Pfad gemäß dem geschätzten Pfadparameter zuzuweisen.

13. Das Netzmanagementsystem nach Anspruch 12, in welchem der Pfadparameter ein Pfadkostenparameter ist, in welchem der Zuordner angepaßt ist, um den Pfad zuzuweisen, der mit dem geringeren geschätzten Pfadkostenparameter verbunden ist.

14. Das Netzmanagementsystem nach jedem der Ansprüche 12 bis 13, in welchem die Schätzfunktion angepaßt ist, um einen oder mehr der folgenden Parameter zu berücksichtigen: Hardware-Leistungsmerkmale der Verbindungen, Pfadlänge, Verbindungslänge, prozentuale Belegung der Verbindungen, Wartungsfreundlichkeit, Zuverlässigkeit und bedienergesteuerte Routing-Einschränkungen.

15. Das Netzmanagementsystem nach jedem der Ansprüche 9 bis 14, außerdem umfassend ein Display zum Anzeigen der Verfügbarkeit sowohl der Adjazenz (A1, A2, A3) der ersten Schicht (SL) als auch mindestens einer Pfadverbindung (A4, A5, A6) der zweiten Schicht (CL).

16. Das Netzmanagementsystem nach jedem der Ansprüche 9 bis 15, in welchem zwei Schichten (SL, CL) angrenzende Schichten sind.

17. Das Netzmanagementsystem nach jedem der Ansprüche 3 bis 15, in welchem zwei Schichten (SL, CL) nichtangrenzende Schichten sind und eine synchrone Transporthierarchieschicht und eine Internet-Protokollschicht umfassen.

18. Ein Telekommunikationsnetz (IN), umfassend mindestens zwei Schichten (SL, CL), wobei das Telekommunikationsnetz (IN) ein Netzmanagementsystem nach jedem der Ansprüche 9 bis 17 umfaßt.

19. Ein Computerprogrammprodukt, umfassend Computerprogrammcodemittel , die angepaßt sind, um alle Schritte nach Anspruch 1 durchzuführen.

20. Ein Computerprogrammprodukt nach Anspruch 19, **dadurch gekennzeichnet, daß** es ein Computerprogramm ist.

21. Ein Computerprogrammprodukt nach Anspruch 19, **dadurch gekennzeichnet, daß** es ein Computerspeichermedium ist.

## Revendications

1. Procédé de détermination d'un chemin dans un réseau de télécommunications (IN) entre un noeud source (MNs) et un noeud de destination (MNd), le réseau de télécommunications (IN) comprenant au moins deux couches (SL, CL), un premier noeud multiservices (MNi) et un second noeud multiservices (MNd) adaptés pour supporter la commutation au niveau desdites au moins deux couches (SL, CL), le procédé comprenant, au niveau d'une deuxième couche (CL) desdites au moins deux couches (SL, CL) :
le calcul d'au moins un chemin possible entre ledit noeud source (MNs) et ledit noeud de destination (MNd) ; et
l'allocation d'un chemin parmi lesdits au moins un chemins possibles,
ledit procédé étant **caractérisé en ce que**, avant ladite étape de calcul, il comprend en outre, au niveau d'une première couche (SL) desdites au moins deux couches (SL, CL) :
la détermination d'une contiguïté (A1, A2, A3) connectant ledit premier noeud multiservices (MNi) et ledit second noeud multiservices (MNd) au niveau de ladite première couche (SL) ; et
la notification à ladite seconde couche (CL) de l'existence de ladite contiguïté (A1, A2, A3),
et **en ce que** l'étape de calcul d'au moins un chemin possible comprend la prise en compte à la fois de ladite contiguïté (A1, A2, A3) et d'au moins une liaison de chemin (A4, A5, A6) de ladite seconde couche (CL).

2. Procédé selon la revendication 1, dans lequel ladite première couche est une couche serveur (SL) et ladite seconde couche est une couche client (CL).

3. Procédé selon la revendication 1 ou 2, comprenant en outre l'étape d'estimation d'un paramètre de chemin pour chacun des au moins un chemins possibles, dans lequel en outre l'étape d'allocation d'un chemin comprend l'allocation d'un chemin selon ledit paramètre de chemin estimé.

4. Procédé selon la revendication 3, dans lequel ledit paramètre de chemin est un paramètre de coût du chemin et dans lequel l'étape d'allocation d'un chemin comprend l'allocation du chemin qui est associé au paramètre estimé inférieur de coût du chemin.

5. Procédé selon la revendication 4, dans lequel l'étape d'estimation d'un paramètre de coût du chemin pour chacun des au moins un chemins possibles comprend la prise en compte d'un ou plusieurs des paramètres qui suivent : caractéristiques matérielles des liaisons, longueur du chemin, longueur de la liaison, pourcentage d'utilisation des liaisons, facilité de maintenance, fiabilité et contraintes d'acheminement de l'opérateur.

6. Procédé selon l'une quelconque des revendications précédentes, comprenant en outre l'étape d'affichage de la disponibilité de ladite contiguïté (A1, A2, A3) de ladite première couche (SL) et de ladite au moins une liaison de chemin (A4, A5, A6) de ladite seconde couche (CL).

7. Procédé selon l'une quelconque des revendications précédentes, dans lequel lesdites deux couches (CL, SL) sont des couches adjacentes.

8. Procédé selon l'une quelconque des revendications 1 à 7, dans lequel lesdites deux couches (CL, SL) sont des couches non adjacentes et comprennent une couche hiérarchique de transport synchrone et une couche IP (protocole Internet).

9. Système de gestion de réseau (NMS-C, NMS-S) adapté pour déterminer un chemin dans un réseau de télécommunications (IN), ledit réseau de télécommunications (IN) comprenant au moins deux couches (CL, SL), un premier noeud multiservices (MNi) et un second noeud multiservices (MNd) adaptés pour supporter la commutation au niveau desdites au moins deux couches (SL, CL), le système de gestion de réseau (NMS-C, NMS-S) comprenant :
un calculateur de chemin qui calcule au moins un chemin possible au niveau d'une seconde couche (CL) desdites au moins deux couches (CL, SL) entre un noeud source (MNs) et un noeud de destination (MNd) dudit réseau de télécommunications (IN) ; et
un dispositif d'allocation de chemin qui alloue un chemin parmi lesdits au moins un chemins possibles,
ledit système (NMS-C, NMS-S) étant **caractérisé en ce qu'**il comprend en outre :
des moyens (NMS-S) de détermination d'une contiguïté (A1, A2, A3) connectant ledit premier noeud multiservices (MNi) et ledit second noeud multiservices (MNd) au niveau d'une première couche (SL) desdites au moins deux couches (SL, CL) ; et
des moyens (NMS-S) de notification audit calculateur de chemin de l'existence de ladite contiguïté (A1, A2, A3),
et **en ce que** le calculateur de chemin prend en compte à la fois ladite contiguïté (A1, A2, A3) de ladite première couche (SL) et au moins une liaison de chemin (A4, A5, A6) de ladite seconde couche (CL) desdites au moins deux couches (SL, CL).

10. Système de gestion de réseau selon la revendication 9, dans lequel ledit système de gestion de réseau comprend un système de gestion de réseau serveur (MNS-S),

11. Système de gestion de réseau selon la revendication 9, dans lequel ledit système de gestion de réseau comprend un système de gestion de réseau client (MNS-C).

12. Système de gestion de réseau selon l'une quelconque des revendications 9 à 11, comprenant en outre un dispositif d'estimation qui estime un paramètre de chemin pour chacun desdits au moins un chemins possibles, dans lequel en outre le dispositif d'allocation est adapté pour allouer un chemin selon ledit paramètre de chemin estimé.

13. Système de gestion de réseau selon la revendication 12, dans lequel ledit paramètre de chemin est un paramètre de coût du chemin et dans lequel le dispositif d'allocation est adapté pour allouer le chemin qui est associé au paramètre estimé inférieur de coût du chemin.

14. Système de gestion de réseau selon l'une quelconque des revendications 12 à 13, dans lequel ledit dispositif d'estimation est adapté pour prendre en compte un ou plusieurs des paramètres qui suivent: caractéristiques matérielles des liaisons, longueur du chemin, longueur de la liaison, pourcentage d'utilisation des liaisons, facilité de maintenance, fiabilité et contraintes d'acheminement de l'opérateur.

15. Système de gestion de réseau selon l'une quelconque des revendications 9 à 14, comprenant en outre un affichage qui affiche la disponibilité de ladite contiguïté (A1, A2, A3) de ladite première couche (SL) comme de ladite au moins une liaison de chemin (A4, A5, A6) de ladite seconde couche (CL).

16. Système de gestion de réseau selon l'une quelconque des revendications 9 à 15, dans lequel lesdites deux couches (SL, CL) sont des couches adjacentes.

17. Système de gestion de réseau selon l'une quelconque des revendications 9 à 15, dans lequel lesdites deux couches (SL, CL) sont des couches non adjacentes et comprennent une couche hiérarchique de transport synchrone et une couche IP (protocole Internet).

18. Réseau de télécommunications (IN) comprenant au moins deux couches (SL, CL), ledit réseau de télécommunications (IN) comprenant un système de gestion de réseau selon l'une quelconque des revendications 9 à 17.

19. Produit informatique comprenant un moyen de codage de programme informatique adapté pour exécuter toutes les étapes de la revendication 1.

20. Produit informatique selon la revendication 19, **caractérisé en ce qu'**il est un programme informatique.

21. Produit informatique selon la revendication 19, **caractérisé en ce qu'**il est un support de stockage informatique.
